Europäisches Patentamt

European Patent Office

Office européen des brevets

(19)

(11) **EP 0 750 764 B1**

(12) **EUROPÄISCHE PATENTSCHRIFT**

(45) Veröffentlichungstag und Bekanntmachung des Hinweises auf die Patenterteilung:
**27.08.1997 Patentblatt 1997/35**

(21) Anmeldenummer: **95911201.2**

(22) Anmeldetag: **02.03.1995**

(51) Int Cl.[6]: **G06F 7/00**

(86) Internationale Anmeldenummer:
**PCT/DE95/00264**

(87) Internationale Veröffentlichungsnummer:
**WO 95/25301 (21.09.1995 Gazette 1995/40)**

(54) **VERFAHREN UND ANORDNUNG ZUR FUZZY-REGELUNG**

PROCESS AND ARRANGEMENT FOR FUZZY CONTROL

PROCEDE ET DISPOSITIF DE REGULATION A LOGIQUE FLOUE

(84) Benannte Vertragsstaaten:
**AT BE CH DE ES FR GB IT LI NL SE**

(30) Priorität: **17.03.1994 DE 4409169**

(43) Veröffentlichungstag der Anmeldung:
**02.01.1997 Patentblatt 1997/01**

(73) Patentinhaber: **SIEMENS AKTIENGESELLSCHAFT**
**80333 München (DE)**

(72) Erfinder: **PALM, Rainer**
**D-80331 München (DE)**

(56) Entgegenhaltungen:
**JP-A- 5 282 456**

- **FUZZY SETS AND SYSTEMS, Bd. 10, 1983 AMSTERDAM NL, Seiten 15-20, D. DUBOIS ET AL. 'UNFAIR COINS AND NECESSITY MEASURES: TOWARDS A POSSIBILISTIC INTERPRETATION OF HISTOGRAMS'**
- **IEEE JOURNAL OF SOLID-STATE CIRCUITS, Bd. 25, Nr. 2, April 1990 NEW YORK US, Seiten 376-382, XP 000116676 H. WATANABE ET AL 'A VLSI FUZZY LOCIC CONTROLLER WITH RECONFIGURABLE, CASCADABLE ARCHITECTURE'**
- **FUZZY SETS AND SYSTEMS, Bd. 18, Nr. 1, Januar 1986 AMSTERDAM NL, Seiten 1-13, CIVANLAR M R ET AL 'Constructing membership functions using statistical data'**
- **D. DRIANKOV ET AL. 'An Introduction to Fuzzy Control' 1993 , SPRINGER VERLAG , BERLIN in der Anmeldung erwähnt Seiten 115-128, 149-155 siehe Seite 123; Abbildung 3.17 siehe Seite 150 - Seite 151; Abbildung 4.4**
- **PROCEEDINGS OF 1994 IEEE 3RD INTERNATIONAL FUZZY SYSTEMS CONFERENCE, ORLANDO, FL, USA, 26-29 JUNE 1994, ISBN 0-7803-1896-X, 1994, NEW YORK, NY, USA, IEEE, Seiten 13-21 vol.1, DRIANKOV D ET AL 'Fuzzy control with fuzzy inputs: the need for new rule semantics'**

## Beschreibung

Fuzzy-Regler gewinnen immer mehr an Bedeutung, da sich komplexe regelungstechnische Probleme häufig einfacher mit Fuzzy-Reglern lösen lassen als auf herkömmliche Weise. Häufig tritt jedoch in der Praxis als Regeldifferenz keine klare, sondern eine verrauschte Größe auf, die das Regelverhalten des Fuzzy-Reglers negativ beeinflußt, wenn sie in ungefilterter Form dem Regler zugeführt wird.

In den bekannten theoretischen Arbeiten und Applikationen, die sich auf Fuzzy-Control (FC) beziehen, wird mit scharfen Eingangsgrößen für den Controller gerechnet (Mamdani-Regler [0]. Diese wird innerhalb des Fuzzy-Controllers skaliert und dann fuzzifiziert [0,1]. "Fuzzifikation" bedeutet hierbei, daß einer normierten scharfen Eingangsgröße entsprechend der vorgegebenen Input-Referenz-Fuzzy-Sets die dementsprechenden Zugehörigkeitsgrade zugeordnet werden. Im Anschluß werden in bekannter Weise auf Basis der Output-Referenz-Fuzzy-Sets, die IF-THEN-Regeln des Fuzzy-Controllers abgearbeitet, als deren Ergebnis ein Output Fuzzy-Set entsteht. Aus diesem Output-Fuzzy-Set wird durch Defuzzifikation (z.B. nach der Schwerpunktsmethode) eine scharfe Ausgangsgröße erzeugt. Diese wird denormiert und als physikalische Stellgröße auf die zu steuernde Strecke gegeben. Falls dem Nutzsignal ein Rauschen überlagert ist, so wird entweder der zufällige Signalwert im Fuzzy-Controller weiterverarbeitet oder das Signal vorgefiltert.

Der Nachteil der Verarbeitung eines ungefilterten Signals ist, daß im allgemeinen der Fuzzy-Controller als statisches nicht lineares Übertragungsglied das Rauschen direkt auf die Stellgröße überträgt. Hat die Strecke Tiefpaßcharakter, so wirkt sie selbst wie ein Filter. Allerdings werden Stelleinrichtung und Strecke durch diese Vorgehensweise zu stark belastet, so daß man das Signal im allgemeinen vorfiltern muß. Der Nachteil einer Vorfilterung jedoch besteht darin, daß zwar ein gleitender Mittelwert durch die Vorfilterung erzeugt wird, aber die Information über die Streuung des Signals und weiterer statistischer Momente verloren geht. Diese Information enthält jedoch Aussagen sowohl über die Konfidenz des einzelnen Meßwertes, als auch über eine eventuelle Asymmetrie der Wahrscheinlichkeitsverteilungsdichte dieser Werte. Letztere kann Auskunft über Asymmetrien im Meßsystem liefern, aber auch auf systematische Fehler wie Drift hinweisen.

Die der Erfindung zugrundeliegende Aufgabe besteht darin, ein Verfahren und eine Anordnung zur Regelung mittels eines Fuzzy-Controllers anzugeben, bei dem ein am Eingang des Fuzzy-Reglers auftretendes Rauschen zusammen mit dem eigentlichen Nutzsignal so verarbeitet wird, daß die Statistik des Gemisches "Nutzsignal-Rauschen" bei der Berechnung der Stellgröße Berücksichtigung findet.

Diese Aufgabe wird für das Verfahren gemäß den Merkmalen des Patentanspruchs 1 und für die Anordnung gemäß den Merkmalen des Patentanspruchs 8 gelöst.

Weiterbildungen der Erfindung ergeben sich aus den Unteransprüchen.

Ein Vorteil des erfindungsgemäßen Verfahrens besteht darin, daß dem Fuzzy-Controller nicht ein gemittelter, scharfer Wert als Regeldifferenz zugeführt wird, sondern ein Wert, der mit einer Wahrscheinlichkeitsverteilungsdichte behaftet ist. Falls eine unsymmetrische Wahrscheinlichkeitsverteilungsdichte dieses Wertes auftritt, so hat dies eine unterschiedliche Gewichtung der Fuzzy-Regeln in der Inferenzprozedur zur Folge, und die statistische Information hat Einfluß auf die Stellgröße, die durch den Fuzzy-Regler erarbeitet wird.

Vorteilhaft können mit dem erfindungsgemäßen Verfahren als Regeldifferenz Größen verarbeitet werden, die mit einem statistischen Rauschen behaftet sind, indem über ein festgesetztes Zeitintervall die Wahrscheinlichkeitsverteilungsdichte dieser Größe ermittelt wird.

Weiterhin können mit dem erfindungsgemäßen Verfahren aber auch räumlich gestreute Meßwerte verarbeitet werden, indem ein Meßwert als Wahrscheinlichkeitsverteilungsdichte des Meßwertes über einen Raumbereich aufgefaßt wird und dem Fuzzy-Controller als Regeldifferenz zugeführt wird.

Besonders vorteilhaft ist es, die Wahrscheinlichkeitsverteilungsdichte während einer Zeit zu ermitteln, die der Zeitkonstanten des Reglers entspricht.

Vorteilhaft ist es, beim Einsatz des erfindungsgemäßen Verfahrens ein Zeitintervall in Unterzeitintervalle aufzuteilen, und dort die Meßwerte des Signales zu erfassen. Durch Auszählen der Häufigkeit der auftretenden Meßwerte kann dann auf einfache Weise die Wahrscheinlichkeitsverteilungsdichte des Signales ermittelt werden.

Vorteilhaft ist es, beim Einsatz des erfindungsgemäßen Verfahrens in einem Mamdani-Regelverfahren den Durchschnitt der Wahrscheinlichkeitsverteilungsdichte als Zugehörigkeitsfunktion mit mindestens einem Referenz-Input-Fuzzy-Set zu bilden und den maximalen Zugehörigkeitswert aller Schnittpunkte im Konklusionsteil der Inferenzprozedur weiter zu verarbeiten, und so eine Stellgröße zu erhalten, die so die statistische Information optimal einbezieht.

Vorteilhaft ist es, beim Einsatz eines Fuzzy-Reglers, der nach dem Takagi-Sugeno-Verfahren arbeitet, das Regelgewicht für eine Fuzzy-Regel genauso zu ermitteln wie beim Mamdani-Regler, jedoch dieses zu Ermittlung einer scharfen Ausgangsgröße mit dem Schwerpunktswert der Wahrscheinlichkeitsverteilungsdichte bzw. der Regeldifferenzzugehörigkeitsfunktion zu multiplizieren.

Besonders günstig ist es in einer Anordnung zur Fuzzy-Regelung einen Klassifikator vorzusehen, welcher aus einem Regeldifferenzsignal eine Wahrscheinlichkeitsverteilungsdichte ermittelt, indem er in bestimmten Zeitintervallen Meßwerte nimmt und die Häufigkeit dieser Meßwerte auszählt.

Besonders günstig ist es, in einer erfindungsgemäßen Anordnung eine Inferenzeinheit vorzusehen, die entweder nach dem Mamdani-Prinzip oder nach dem Takagi-Sugeno-Prinzip arbeitet, da dieses die beiden Fuzzy-Regelverfahren sind, die am häufigsten eingesetzt werden.

Im folgenden wird die Erfindung anhand von Figuren weiter erläutert.

Figur 1 zeigt schematisiert eine Regelstrecke mit einem erfindungsgemäßen Fuzzy-Controller,
Figur 2 zeigt die Ermittlung einer Wahrscheinlichkeitsverteilungsdichte,
Figur 3 zeigt den Inferenzvorgang beim Mamdani-Regler,
Figur 4 zeigt das Regelverhalten eines Fuzzy-Reglers, welcher nach dem erfindungsgemäßen Verfahren arbeitet,
Figur 5 zeigt einen schematisiert dargestellten Takagi-Sugeno-Regler,
Figur 6 zeigt den Inferenzprozeß bei einem Takagi-Sugeno-Regler.

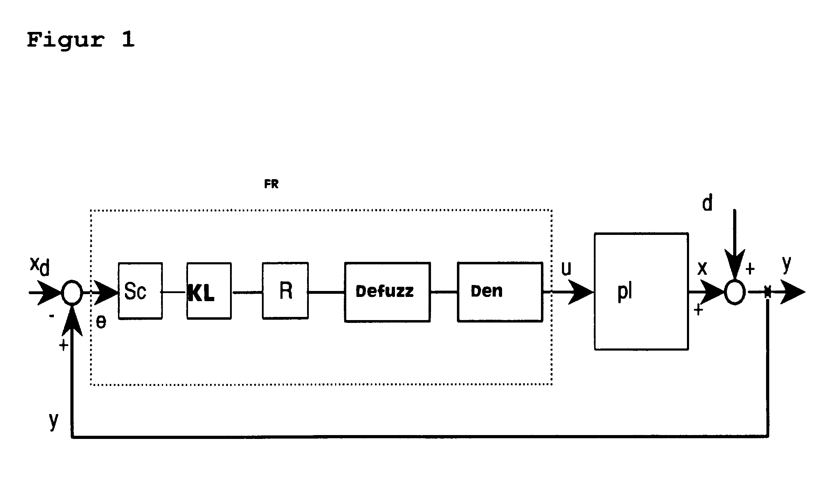

Figur 1 zeigt ein Beispiel eines Regelkreises, in welchem ein Mamdani-Fuzzyregler FR vorgesehen ist. Dem Regelkreis wird als Führungsgröße $x_d$ aufgeschaltet, welcher mit einer Rückführung y zu einer Regeldifferenz e verknüpft wird. Diese Regeldifferenz wird in einem Normierungsglied Sc beispielsweise durch Multiplikation mit einem Skalierungsfaktor auf ein Intervall abgebildet (universe of discourse) und anschließend einem Klassifikator KL zugeführt. In diesem wird im Laufe eines Zeitintervalles T eine Häufigkeitsverteilung und dann durch Normierung auf beispielsweise den maximalen Häufigkeitswert die Inputzugehörigkeitsfunktion gebildet. Diese wird dann einer Inferenzeinheit R zugeführt. Darauf folgt der Defuzzifizierungsvorgang in einem Defuzzifizierer Defuzz und die Denormierung der gefundenen Größe in Den. Als Ausgang des Fuzzy-Reglers FR, welcher aus Sc, KL, R, Defuzz und Den besteht, ergibt sich die Stellgröße u, welche einer Regelstrecke pl zugeführt wird. Diese formt ihn zur Regelgröße x um, welche mit einer Störgröße d beaufschlagt wird und mit ihr additiv zum zurückgeführten Wert y verknüpft wird.

Wie bereits bei der Würdigung des Standes der Technik beschrieben, wird in diesem Regelkreis der Inferenzeinheit des Fuzzy-Reglers FR keine scharfe Größe e als Regeldifferenz zugeführt. Vielmehr erhält er eine unscharfe Größe, beispielsweise in Form einer Wahrscheinlichkeitsverteilungsdichte eines zeitabhängigen Wertes dieser Größe, oder es wird ihm eine räumlich verteilte Größe in Form einer Wahrscheinlichkeitsverteilungsdichte eines Wertes dieser Größe in Bezug auf einen Raumbereich zugeführt. Dabei ist zu bemerken, daß die Unscharfe der Größe zum einen beispielsweise von einer verrauschten Führungsgröße $x_d$ herrühren kann, oder daß die unscharfe Regeldifferenz dadurch entsteht, daß die Rückführung mit einem unscharfen Störsignal d beaufschlagt wird. Es wird hier also der neue Weg gegangen, einem Regelkreis nicht einen scharfen Wert zuzuführen, sondern vielmehr eine Wahrscheinlichkeitsverteilungsdichte als Regeldifferenz e einzugeben und diese im Inferenzprozeß des Fuzzyreglers FR zu verarbeiten. Im Inferenzprozessor R wird beispielsweise diese normierte Wahrscheinlichkeitsverteilungsdichte als Regeldifferenzzugehörigkeitsfunktion interpretiert.

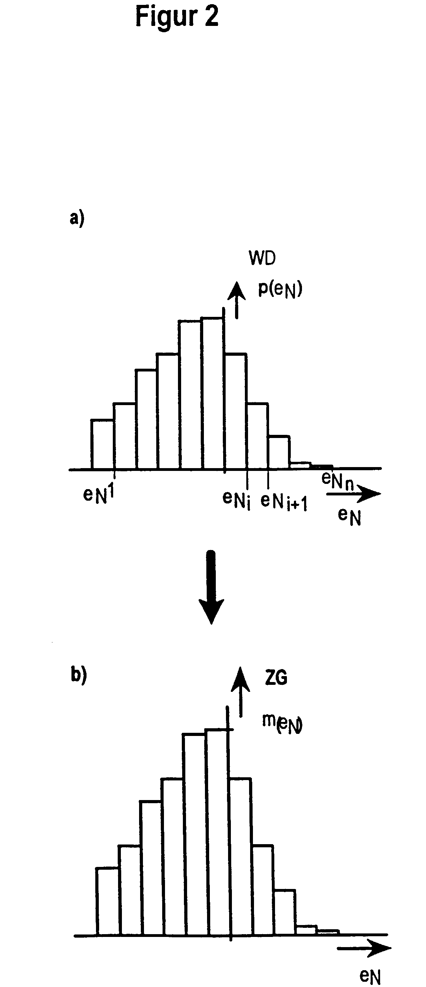

Das heißt sowohl in einem Bedingungteil, als auch in einem Konklusionsteil des Inferenzprozessors R wird nicht ein scharfer Wert der Regeldifferenz, sondern eine Zugehörigkeitsfunktion der Regeldifferenz als Eingangsgröße verarbeitet. Man erhält so im Gegensatz zu den bisher üblichen Verfahren nicht nur einen Schnittpunkt mit einer Referenzzugehörigkeitsfunktion, sondern in Abhängigkeit vom Verlauf der Referenzzugehörigkeitsfunktion mehrere Schnittpunkte, von denen beispielsweise derjenige mit der maximalen Zugehörigkeit zur Weiterverarbeitung ausgewählt wird. Andererseits ist es im Gegensatz zu den bisherigen Verfahren, die crisp-Inputs verwenden, möglich, daß für einen Überdeckungsgrad 1 der Referenzzugehörigkeitsfunktionen (crosspointratio = 1, crosspointlevel = 0,5 [4]) mehr als zwei Referenzzugehörigkeitsfunktionen gleichzeitig geschnitten werden können. So wird beispielsweise durch einen unsymmetrischen Verlauf der Regeldifferenzugehörigkeitsfunktion der erfindungsgemäße Vorteil erzielt, daß mehr als zwei verschiedene Input-Referenz-Fuzzy-Sets unterschiedlich gewichtet werden. Die als Schnittpunkte gefundenen Zugehörigkeitswerte, können anschließend im Konklusionsteil des Inferenzprozessors R in Abhängigkeit der definierten Fuzzy-Regeln mit den Output-Referenz-Fuzzy-Sets geschnitten werden. Man erhält anschließend beispielsweise durch Anwendung der üblichen Schwerpunktsmethode zur Defuzzifizierung in Defuzz und anschließender Denormierung Den einen scharfen Wert als Ausgangsgröße u. Im Unterschied zu den bisher eingesetzten Fuzzy-Regelungsverfahren hängt nun dieser Wert jedoch von der Statistik der eingegebenen Regeldifferenz ab. Dies führt beispielsweise zu einem verbesserten Ansprechen des Fuzzy-Reglers auf verrauschte Signale und bietet weiterhin den Vorteil, daß vollständig auf eine zusätzliche Filterung der eingegebenen Regeldifferenz verzichtet werden kann, wobei natürlich auch die Nachteile, welche durch eine Filterung entstehen, vermieden werden können. Figur 2 zeigt als Beispiel wie eine Wahrscheinlichkeitsdichteverteilung aus einem zeitabhängigen Signal gewonnen werden kann. Zunächst muß davon ausgegangen werden, daß beispielsweise in einem Klassifikator des Fuzzy-Reglers während eines definierten Zeitintervalles T ein eingehendes Signal, in diesem Falle die Regeldifferenz $e_N$ untersucht wird. Und zwar geschieht dies dadurch, daß während des großen Zeitintervalles T das Signal $e_N$ mehrfach gemessen wird. Anschließend kann beispielsweise eine Auszählung der unterschiedlichen gemessenen Werte erfolgen und es ergibt sich für jeden Wert $e_{N_1}$ bis $e_{N_n}$ ein Häufigkeitswert. Dieser Wert kann als Wahrscheinlichkeitsdichteverteilung $p(e_N)$ aufgetragen werden.

Ein Beispiel einer solchen Wahrscheinlichkeitsdichteverteilung ist in Figur 2a als WD aufgetragen.In Figur 2b ist dargestellt, wie aus Wahrscheinlichkeitsdichteverteilung WD eine interpretierbare Zugehörigkeitsfunktion des Regeldifferenzsignales $e_N$ abgeleitet werden kann. Dort sind die einzelnen Werte von $e_N$ in Abhängigkeit eines Zugehörigkeitswertes $\mu(e_N)$ aufgetragen. Die gezeigte Zugehörigkeitsfunktion ZG ist in Form eines Histogrammes aufgetragen. Um die Wahrscheinlichkeitsdichteverteilung WD in eine Zugehörigkeitsfunktion ZG zu überführen, wird beispielsweise der maximale Wahrscheinlichkeitswert $p(e_N)$ als Normierungsgröße herangezogen. Damit wird Wahrscheinlichkeitsdichteverteilung WD beispielsweise auf 1 normiert, um ZG zu erhalten.

Im Einzelnen kann dabei wie folgt vorgegangen werden:

Im Rahmen der Erfindung wird innerhalb einer vorgegebenen Zeit $T$ mithilfe von $k$ Messungen eine Wahrscheinlichkeitsverteilungsdichte $p$ in Form eines Histogrammes aufgezeichnet. Zu diesem Zweck wird das physikalische Signal (z.B. das Fehlersignal $e$) mit Hilfe eines vorbestimmten Skalierungsfaktors $N_e$ so skaliert, daß das normierte Signal $e_N$ mit einer bestimmten Wahrscheinlichkeit in eine vorbestimmte und in $n$-1 Klassen geteilte, normierte Domäne $I_e = (e_1, e_n)$ fällt:

$$e_N = N_e \cdot e. \tag{1}$$

Danach wird $e_N$ mit Hilfe eines Klassifikators ein ebenfalls vorbestimmtes Intervall $e_N \in [e_i, e_{i+1}]$ innerhalb der Domäne $I_e = (e_1, e_n)$ zugewiesen. Mithilfe von $k$ Messungen wird ein Histogramm mit $n$-1 Klassen für die Häufigkeitsverteilung von $e_N$ in der Domäne $I_e = (e_1, e_n)$ aufgebaut. Aus diesem Histogramm wird durch Normierung sämtlicher Häufigkeitswerte $p(e_N)$ auf den Maximalwert $p(e_N)_{max}$ eine Zugehörigkeitfunktion $\mu(e_N)$ gebildet, welche die folgende Bedeutung besitzt:

$$e_N \text{ ist } e_N(p(e_N)_{max}). \tag{2}$$

Damit erhält der $e_N$-Wert mit $p(e_N) = p(e_N)_{max}$ den Zugehörigkeitswert $\mu(e_N) = 1$.

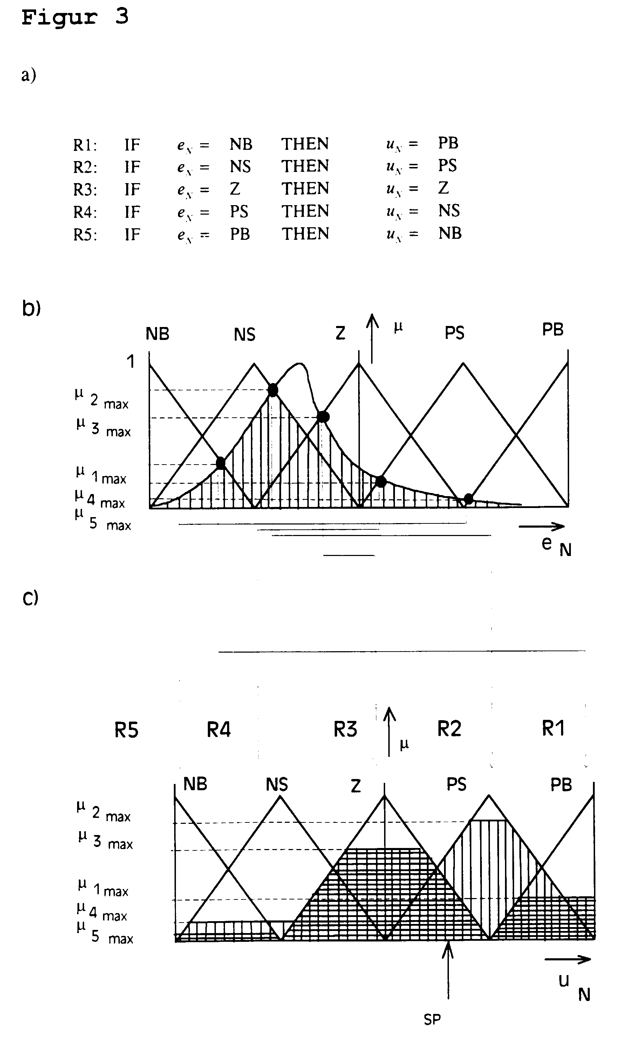

Im Falle eines Fuzzy-Controllers mit nur einem Eingang geht man mit der sich ergebenden Zugehörigkeitsfunktion $\mu(e_N)$ in den Regelsatz hinein. Als Beispiel soll der Regelsatz von Figur 3a dienen

Im Falle eines Mamdani-Inferenzkonzepts wird der Durchschnitt (das Minimum) des Input-Fuzzy-Sets mit dem jeweiligen Input-Referenz-Fuzzy-Set $e_N$= NB, ...... , PB gebildet und die maximalen Zugehörigkeitswerte gebildet. Mit diesen Maximalwerten werden die Output-Referenz-Fuzzy-Sets $u_N$= NB, ......, PB geklippt (abgeschnitten).

Die Defuzzifikation erreicht man einfacherweise durch Bildung des Schwerpunkts (center of gravity) bei dem Output-Fuzzy-Set.

Die Vorgehensweise der Normierung auf 1 bietet sich an, da in der Regel die Fuzzy-Sets zur Auswertung in einer Inferenzprozedur eines Fuzzy-Controllers auf 1 normiert sind.

Für das erfindungsgemäße Verfahren ist es jedoch völlig belanglos, auf welche Größe normiert wird. Es ist lediglich zu beachten, daß dieselbe Normierungsgröße für die Normierung der Wahrscheinlichekeitsdichteverteilung verwendet wird, wie sie auch für die Input-Referenz-Fuzzy-Sets und die Output-Referenz Fuzzy-Sets Verwendung findet, da sonst kein sinnvoller Vergleich dieser Größen möglich ist.

In Figur 3 sind Beispiele von unterschiedlichen Vorgängen bei der Durchführung des erfindungsgemäßen Verfahrens in Verbindung mit einem Mamdani-Inferenzprozeß aufgezeigt. Dabei erkennt man in Teil a die zugrundegelegten Fuzzy-Regeln. In Teil b ist die Vorgehensweise im Bedingungsteil des Inferenzprozesses dargestellt und in Teil c ist die Auswertung der gefundenen Zugehörigkeitswerte im Konklusionsteil dargestellt.

Der Teil a von Figur 3 spricht im wesentlichen für sich selbst, Es ist lediglich zu beachten, daß die Regeln R1 bis R5 durchnummeriert sind und daß hier die normierten Größen als Bezugsgrößen, d.h. $e_N$ als normierte Regeldifferenz und $u_N$ als normierte Stellgröße verwendet werden. Weiterhin bedeuten NB negativ big, NS negativ small, Z zero, PS positiv small und PB positiv big.

In Figur 3b wird die Schnittbildung der Regeldifferenzzugehörigkeitsfunktion $e_N$ mit den Input-Referenz-Fuzzy-Sets gezeigt. Dabei ergeben sich durch die Schnittbildung mit der Regeldifferenzzugehörigkeitsfunktion die Zugehörigkeitswerte $\mu_{1_{max}}$ bis $\mu_{5_{max}}$. Die Vorgehensweise bei der Verknüpfung der Funktionen, hier Schnittbildung, ergibt sich aus der logischen Verknüpfung der linguistischen Variablen, welche in den Fuzzy-Regeln R1 bis R5 festgelegt ist. Im einzelnen erhält man $\mu_{1_{max}}$ als Wert des Schnittpunktes von $e_N$ und NS, $\mu_{3_{max}}$ als Zugehörigkeitswert von $e_N$ und Z, als Zugehörigkeitswert von $e_N$ zu NB, $\mu_{4_{max}}$ als Zugehörigkeitswert von $e_N$ zu PS und $\mu_{5_{max}}$ als Zugehörigkeitswert von $e_N$ zu PB. Aus diesem Beispiel läßt sich deutlich erkennen, daß eine nicht gleich verteilte Zugehörigkeitsfunktion im Vergleich zu anderen Verfahren zu unterschiedlichen Zugehörigkeitswerten $\mu$ führt. Dadurch unterscheidet sich das erfindungsgemäße Verfahren von gängigen Verfahren, in welchen nur ein scharfer Wert, welcher auch als gleichverteilte Zugehörigkeitsfunktion mit einer Gausverteilung betrachtbar ist, verwendet wird.

Hier werden beispielsweise im Bedingungteil die maximalen Zugehörigkeitswerte $\mu_{max}$ ermittelt. Dies geschieht in Abhängigkeit der Fuzzy-Regeln R1 bis R5 und der gewählten logischen Verknüpfungen. Es ist jedoch ohne Einschränkung auch denkbar, andere Zugehörigkeitswerte als den maximalen Wert des Funktionsschnittpunkts als Zugehörigkeitswert zu verwenden.

In Figur 3c ist der Vorgang im Konklusionsteil des Mamdani-Fuzzy-Reglers als ein Beispiel für das erfindungsgemäße Verfahren dargestellt. Figur 3b und 3c sind durch Pfeile miteinander verbunden, welche mit den Bezeichnungen der einzelnen Fuzzy-Regeln versehen sind, die im Konklusionsteil an der entsprechenden Stelle angewendet werden. Die Zugehörigkeitswerte für das Output-Referenz-Fuzzy-Set werden über die Zugehörigkeitswerte aus dem Bedingungteil des Fuzzy-Reglers gefunden. Diese sind in Figur 3c entsprechend am linken Rand des Diagramms aufgetragen. Der scharfe Ausgangswert $u_N$ aus dem Konklusionsteil wird in üblicher Weise durch Bildung des Schwerpunkts der durch Konklusion gefundenen Fläche ermittelt.

Für den Fall, daß der Regler die Variable $s = \lambda \cdot e + \dot{e}$ verarbeitet (Sliding-mode-Fuzzy Controller [2]), werden beispielsweise folgende Schritte getan:

1. Bestimmung von $e$ durch Messung von $y$ und anschließendem Soll-Istwert-Vergleich
2. Normierung (Skalierung) von $e$:

$$e_N = N_e \cdot e$$

3. Bestimmung von $\dot{e}$ durch Messung von $\dot{y}$ und anschließendem Soll-Istwert-Vergleich
4. Normierung (Skalierung) von $\dot{e}$:

$$\dot{e}_N = N_{\dot{e}} \cdot \dot{e}$$

5. Bildung von

$$s_N = e_N + \dot{e}_N$$

6. Klassifikation von $s_N$ entsprechend n-1 vorgegebener Klassen innerhalb der Domäne

$$I_s = (s_1, s_n)$$

7. Bildung des Fuzzy-Sets $\mu_{s_N}$ durch Normierung der in Schritt 6 erhaltenen Häufigkeitsverteilung
8. Abarbeitung der folgenden Regeln:

IF $s_N = $ NB     THEN $u_N = $ PB
IF $s_N = $ NS     THEN $u_N = $ PS
IF $s_N = $ Z     THEN $u_N = $ Z
IF $s_N = $ PS     THEN $u_N = $ NS
IF $s_N = $ PB     THEN $u_N = $ NB

mit dem Ergebnis eines Output-Fuzzy-Sets für $u_N$
9. Defuzzifikation von $u_N$ durch Schwerpunktbildung (center of gravity)
10. Denormierung von $u_N$:

$$u = N_u \cdot u_N$$

11. Ausgabe der Stellgröße $u$ auf die Regelstrecke.

Die Übertragungscharakteristik eines Fuzzy-Controllers mit fuzzy-Inputs und crisp-Outputs kann nicht auf dieselbe einfache Weise bestimmt werden, wie diejenige mit crisp-Inputs und crisp-Outputs. Der Grund dafür ist, daß es kein point-to-point-mapping zwischen Input und Output mehr gibt und daß das Aufzeichnen einer solchen Charakteristik nur mithilfe ausgewählter Parameter des Input-Fuzzy-Sets möglich ist. Für eine glockenförmiges Input-Fuzzy-Set (normierte Gauß-Kurve) genügen zwei Parameter, der Mittelwert $\bar{e}_N$ und die Standardabweichung $\sigma_{e_N}$.

Da ein Sliding Mode Fuzzy-Controller wie ein zustandsabhängiges Filter wirkt [2], ergibt sich für Fuzzy-Inputs die folgende in Konsequenz:

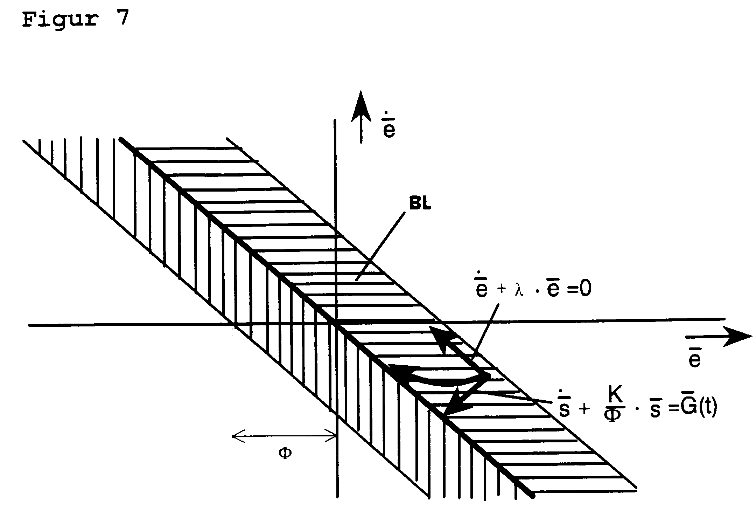

Signale mit stärkerer Streuung (Standardabweichung $\sigma_{e_N}$) werden stärker gefiltert als Signale mit kleinerer Streuung. Weiterhin verlangsamt (beschleunigt) sich die Annäherungsphase in Richtung des Ursprungs der Phasenebene für Signale mit hoher (niedriger) Streuung, was man leicht durch die entsprechenden Filtergleichungen erkennt. Dieses läßt sich am besten am Beispiel des Sliding-Mode-Control mit Boundary-Layer BL erklären, einer nichtlinearen Regelungsart , die dem Fuzzy-Controller am nächsten kommt. Figur 7 zeigt dabei das Verhalten der Mittelwerte $\bar{e}$ und $\dot{\bar{e}}$ der fuzzy-Zustände eund $\dot{e}$in der Phasenebene für den Sliding-Mode-Control mit Boundary-Layer BL

Hier ist

K - maximaler Regleroutput

$\lambda$ - Absolutwert des Anstiegs der Schaltgeraden

$\overline{G}(t)$ - Mittelwert der Modellunsicherheiten, unmodellierten Frequenzen, Parameterfluktuationen

und weiterhin

$$\overline{s} \;=\; \lambda \,\cdot\, \overline{e} \,+\, \dot{\overline{e}}. \qquad\qquad\qquad (4)$$

Der Annäherungsprozeß des Zustandsvektors $\bar{\bar{e}} = (e, \dot{\bar{e}})^T$ in Richtung des Ursprungs der Phasenebene wird durch die folgenden Filtergleichungen bestimmt:

Richtung Normale zur Schaltgeraden:

$$\dot{\bar{e}} + \lambda \cdot \bar{e} = 0 \qquad\qquad (5)$$

Richtung Schaltgerade:

$$\dot{\bar{s}} + \frac{K}{\Phi} \cdot \bar{s} = \overline{G}(t) \qquad\qquad (6)$$

Im Falle des o.g. Sliding-Mode-Fuzzy-Controller gelten ähnliche Verhältnisse, da ein solcher Controller eine Verallgemeinerung des Sliding-Mode-Controllers mit Boundary-Layer BL ist. Da bei größerer Streuung ein geringeres $u_N$ erzeugt wird, ergibt sich aber ein geringeres $K$ in der Filtergleichung (6), die die Annäherungsphase in Richtung der Schaltgeraden beschreibt. Daher werden auch die Mittelwerte $\overline{G}(t)$ der Modellunsicherheiten, unmodellierte Frequenzen, Parameterfluktuationen in diesem Fall stärker gefiltert (schwächer gewichtet).

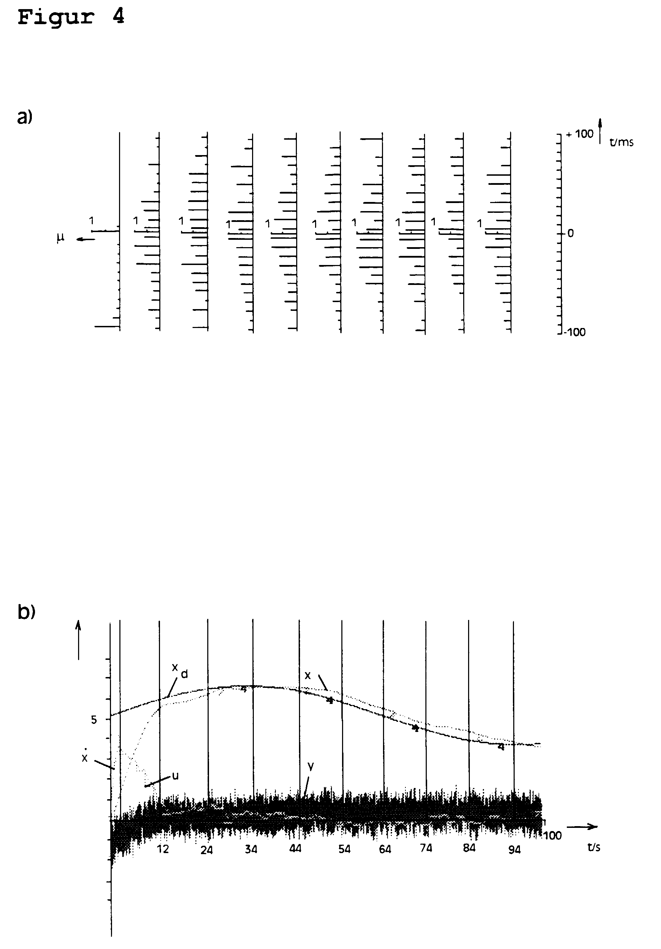

Figur 4 zeigt ein Beispiel eines Regelprozesses der nach dem erfindungsgemäßen Verfahren abläuft. Die Bezeichnungen sind wie in den anderen Figuren verwendet. Es ist zu beachten, daß die Zeiteinteilung von Figur 4b auch für den Teil 4a gilt. Im Einzelnen ist in Figur 4a von links nach rechts die Wahrscheinlichkeitsverteilungsdichte bzw. die entsprechende Zugehörigkeitsfunktion der Regeldifferenz über ein bestimmtes konstantes Zeitintervall aufgetragen. Dieses Zeitintervall liegt hier beispielsweise innerhalb von plus 100ms und minus 100ms von den Werten, die an der unteren Achse als normierte Zeiten aufgetragen sind, es kann jedoch auch andere Werte haben. Deutlich erkennt man, daß die ermittelten Zugehörigkeitsfunktionen nicht einer Gaußverteilung gehorchen. Besonders klar wird dies beim Wert zur Zeit 64.

In Figur 4b ist die Führungsgröße $x_d$ als Sinusfunktion über die Zeit aufgetragen. Gleichzeitig sieht man die Regelgröße x, welche nach dem erfindungsgemäßen Verfahren ermittelt wurde. Weiterhin ist eine verrauschte Größe y als Rückführung im Diagramm dargestellt. Da diese verrauschte, bzw. mit einer Wahrscheinlichkeitsstatistik behaftete Größe zur Regeldifferenzbildung herangezogen wird, ergeben sich die in Figur 4a dargestellten Wahrscheinlichkeitsdichteverteilungen, bzw. Regeldifferenzzugehörigkeitsfunktionen. Besonders im Wendepunkt des Sinuskurve, der ca. bei der Zeit 64 liegt, erkennt man, daß die Einbeziehung der Statistik eine bessere Regelgröße x liefert.

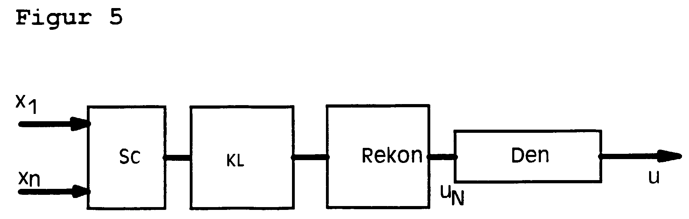

In Figur 5 ist schematisch die Reglerstruktur eines Takagi-Sugeno-Reglers dargestellt. Im einzelnen besteht dieser hier aus einer Skalierungseinheit Sc aus einer Regelbasis und Konklusionseinheit Rekon und einer Denormierungseinheit Den. Der Skalierungseinheit Sc werden beim Takagi-Sugeno Regler hierbei n scharfe Werte $x_1$ bis $x_n$ zugeführt, die zu einem bestimmten Zeitpunkt im Rgelkreis ermittelt wurden. Der Inferenzteil Rekon besteht auch hier aus einem Bedingungs- und einem Konklusionsteil, wobei der Bedingungteil genauso arbeitet wie bei einem Mamdani-Regler, jedoch im Konklusionsteil auf die gefundenen Zugehörigkeitswerte eine Funktion ausgeübt wird, welche ohne Defuzzifizierungseinheit direkt zu einem scharfen Wert der Stellgröße $u_N$ führt. Nach der Denormierung in Den ergibt sie sich zu einer scharfen Stellgröße u.

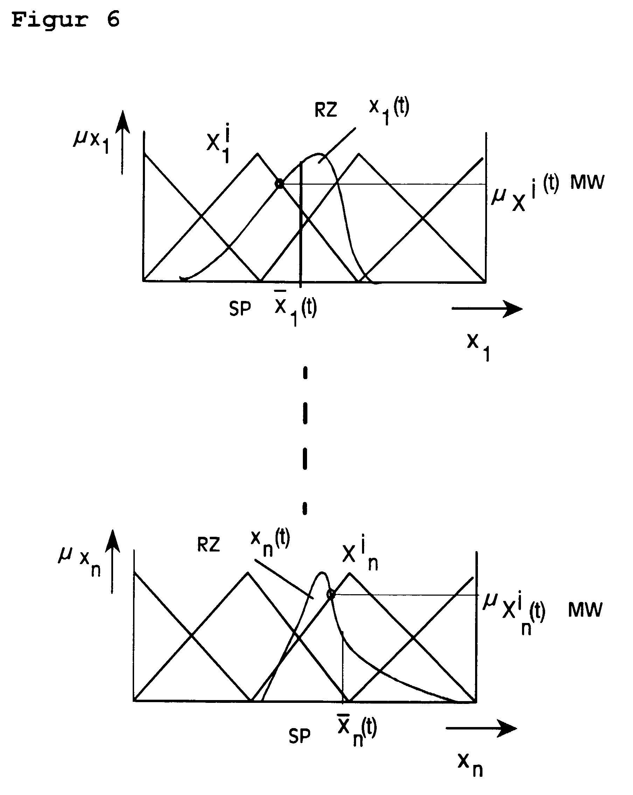

Figur 6 zeigt ein Beispiel für die Wirkungsweise des Bedingungteil eines Takagi-Sugeno-Reglers. Beispielsweise soll hier die Regeldifferenzzugehörgkeitsfunktion RZ mit einer Regel $R_i$, welche n UND-Verknüpfungen von linguistischen Variablen $x_1$ bis $x_n$ enthält, verknüpft werden. Es ist hier nach dem erfindungsgemäßen Verfahren beispielsweise vorgesehen, die Regeldifferenzzugehörigkeitsfunktion RZ mit den Input-Referenz-Fuzzy-Sets der linguistischen Variablen zu schneiden und daraus einen Zugehörigkeitswert $\mu_{x_1^j(t)}$ bis $\mu_{x_n^j(t)}$ für jede linguistische Variable $x_1^i$ bis $w_n^i$ separat zu ermitteln. Das Minimum MW dieser ermittelten Zugehörigkeitswerte für die Regel $R_l$ dient als Regelgewicht im Konklusionsteil des Takagi-Sugeno-Reglers. Zur Ermittlung der Äquivalente von scharfen Eingangsgrößen $x_1$ bis $x_n$ für den Takagi-Sugeno-Regler, hat es sich als vorteilhaft erwiesen nach dem erfindungsgemäßen Verfahren den Schwerpunkt SP der jeweiligen Regeldifferenzzugehörigkeitsfunktion $x_1(t)$ eines Eingangswertes als $\bar{x}_1^-(t)$, bzw. $\overline{x}_n(t)$ als Schwerpunkt SP von $x_n(t)$ zu ermitteln.

Takagi-Sugeno-Fuzzy-Controller sind hinsichtlich ihrer Regelstruktur verschieden von den herkömmlichen Mamdani-Fuzzy-Controller aufgebaut [3]. Während beim Mamdani-Fuzzy-Controller sowohl im Bedingungs- als auch im Konklusionsteil einer Regel Fuzzy-Sets auftreten, steht beim Takagi-Sugeno-Fuzzy-Controller im Bedingungteil der Regel zwar ein Fuzzy-Set, dagegen im Konklusionsteil eine Gleichung, die einen algebraischen Zusammenhang zwischen den Eingangsvariablen und der Ausgangsvariablen herstellt.
Eine Regel dieser Art hat beispielsweise die folgende Form:
Regel $R_i$:
IF      $(x_1 = X^i1)$      AND ... AND $(x_n = X^i_n)$      THEN $u_i = f_i(x_1, ..., x$

Diese Regel wird so berechnet, daß zunächst für n Crisp-Werte $x_1...x_n$, die zu einem bestimmten Zeitpunkt $t$ gemessen wurden, die Zugehörigkeitsgrade $\mu_{Xi1}, ..., \mu_{Xin}$ zu den Fuzzy-Werten $X^i_1, ... X^i_n$ bestimmt werden. Aus diesen Zugehörigkeitsgraden wird das Regelgewicht durch Minimumbildung ermittelt:

$$\mu^i = \min(\mu_{X^j_1}, ..., \mu_{X^j_n}).$$

Danach wird die Gleichung

$$u_i = f_i(x_1, ..., x_n)$$

berechnet und mit dem Regelgewicht $\mu^i = \min(\mu_{X^j_1}, ..., \mu_{Xin})$ multipliziert.
Aus m Regeln erhält man so m Werte von $u_i$, die nach Abarbeitung aller Regeln zu einem gemeinsamen Reglerausgangswert $u$ wie folgt zusammengefaßt werden:

$$u = \frac{\sum_{i=1}^{m} \mu^i \cdot u_i}{\sum_{i=1}^{m} \mu^i}$$

Da der Reglerausgang schon ein Crisp-Wert ist, enthält die Reglerstruktur des Takagi-Sugeno-Reglers keinen Defuzzifikationsblock.

Die Wirkungsweise des Takagi-Sugeno-Reglers für Fuzzy-Inputs lehnt sich, was die Verarbeitung der Bedingungsseite einer Regel betrifft, an die des Mamdani-Reglers an:

1. Bildung der Durchschnittsmengen der Fuzzy-Input-Sets

$$X_1(t) = (\mu_{X_1}(x_1(t)), x_1(t)) ..... X_n(t) = (\mu_{X_n}(x_n(t)), x_n(t))$$

mit den jeweiligen Referenz-Fuzzy-Sets $X^i_1,..., X^i_n$ die in Regel $R_i$ bearbeitet werden.

2. Bildung des Maximums $\mu^i k_{max}$ (mit $k=1...n$, Nummer des Referenz-Fuzzy-Sets) sämtlicher Zugehörigkeitswerte der jeweiligen Durchschnittsmengen

$$X_1(t) = (\mu_{X_1}(x_1(t)), x_1(t)) ..... X_n(t) = (\mu_{X_n}(x_n(t)), x_n(t))$$

(siehe Bild 12.).

3. Bildung des Minimums über alle $\mu^i_{k_{max}}$:

$$\mu^i = min(\mu^i_{1_{max}},...,\mu^i_{n_{max}}).$$

Diese Gleichung stellt das Regelgewicht für die i-te Regel $R_i$ dar.

Im Unterschied zur Wirkungsweise mit Crisp-Inputs stellt $X_k(t)$ ein Fuzzy-Set dar. Das Ergebnis der Konklusionsgleichung sollte aber ein Crisp-Wert sein. Deshalb werden in der ursprünglichen Konklusionsgleichung $u_i = f_i(x_1, ..., x_n)$ der i-ten Regel die Crisp-Werte $x_1, ..., x_n$ vorzugsweise durch die centers of gravity $\bar{x}_1, ..., \bar{x}_n$ der Fuzzy-Werte $X_1, ..., X_n$ ersetzt, von denen erwartet wird, daß sie die Fuzzy-Input-Werte genügend gut repräsentieren. Die Konklusionsgleichung lautet dann:

$$u_i = f_i(\bar{x}_1, ..., \bar{x}_n)$$

und die Gleichung für den Gesamtwert ergibt sich wieder zu:

$$u = \frac{\sum_{i=1}^{m} \mu^i \cdot u_i}{\sum_{i=1}^{m} \mu^i}.$$

**Literatur**

[0] E.H. Mamdani: Application of fuzzy algorithms for control of a simple dynamic plant.
Proc. IEEE, 121, S. 1585-1588; 1974

[1] D. Driankov, H.Hellendoorn, M.Reinfrank (1993): An Introduction to Fuzzy Control.
*Springer-Verlag Berlin, Heidelberg, New York*

[2] R.Palm : Sliding Mode Fuzzy Control, *1st FUZZ-IEEE '92 San Diego,* pp.519-526

[3] T. Takagi, M. Sugeno:Fuzzy identification of systems and its application to modeling and control.
IEEE Trans. on Syst., Man, and Cyb., Vol. SMC-15, No.1 1985

[4] D. Driankov, H.Hellendoorn, M.Reinfrank (1993): An Introduction to Fuzzy Control.
*Springer-Verlag Berlin, Heidelberg, New York, S. 119.*

**Patentansprüche**

1. Verfahren zur Fuzzy-Regelung,

a) bei dem einem Fuzzy-Regler (FR) als Regeldifferenz (e) mindestens eine unscharfe Größe (e) in Form einer Wahrscheinlichkeitsverteilungsdichte ihrer Werte zugeführt wird,

**EP 0 750 764 B1**

b) bei dem die Wahrscheinlichkeitsverteilungsdichte auf einen vorgegebenen Wert normiert (Sc) wird,
c) und bei dem in einer Inferenz-Prozedur (R, Rekon) des Fuzzy-Reglers (FR) die normierte Wahrscheinlichkeitsverteilungsdichte (WD) als Regeldifferenzzugehörigkeitsfunktion (RZ) an Stelle eines scharfen Wertes zur Bildung einer Stellgröße (u) verarbeitet wird.

2. Verfahren nach Anspruch 1, bei dem mindestens die Wahrscheinlichkeitsverteilungsdichte (WD)eines Wertes einer sich zeitlich ändernden Größe des Regelkreises über ein festgesetztes Zeitintervall ermittelt und zur Bildung der Regeldifferenz (e) herangezogen wird.

3. Verfahren nach Anspruch 2, bei dem als Regeldifferenz (e) eine Differenz aus Regel fehler und zeitlicher Ableitung des Regelfehlers zugeführt wird.

4. Verfahren nach Anspruch 1, bei dem mindestens eine räumliche Verteilung von Werten innerhalb eines festgelegten Raumbereiches von einer räumlich auftretenden Größe des Regelkreises ermittelt und als Wahrscheinlichkeitsverteilungsdichte (WD) lediglich eines Wertes zur Bildung der Regeldifferenz (e) herangezogen wird.

5. Verfahren nach Anspruch 2, bei dem die Wahrscheinlichkeitsverteilungsdichte (p) während eines Regelvorganges ermittelt wird.

6. Verfahren nach Anspruch 5, bei dem die Wahrscheinlichkeitsverteilungsdichte (p) während eines Regelvorganges durch eine mehrfache Analyse der Regeldifferenz und Auszählen der analysierten Werte ermittelt wird.

7. Verfahren nach einem der Ansprüche 1 bis 6,

   a) bei dem in einem Bedingungsteil der Inferenz-Prozedur nach dem Mamdani-Verfahren der Durchschnitt der Regeldifferenzzugehörigkeitsfunktion mit mindestens einem Input-Referenz-Fuzzy-Set gebildet und der Zugehörigkeitswert des Schnittpunktes als Schnittwert ermittelt wird,
   b) bei dem der Schnittwert in einem Konklusionsteil der Inferenz-Prozedur zur Bildung einer Stellgröße herangezogen wird.

8. Verfahren nach einem der Ansprüche 1 bis 6,

   a) bei dem in einem Bedingungsteil der Inferenz-Prozedur nach dem Takagi-Sugeno-Verfahren der Durchschnitt der Regeldifferenzzugehörigkeitsfunktion mit mindestens zwei Input-Referenz-Fuzzy-Sets einer Regel gebildet und die Zugehörigkeitswerte der jeweiligen Schnittpunkte als Schnittwertmenge ermittelt werden,
   b) bei dem als scharfer Eingangswert für einen Konklusionsteil der Inferenz-Prozedur nach dem Takagi-Sugeno-Verfahren der Schwerpunktswert der Regeldifferenzzugehörigkeitsfunktion ermittelt wird,
   C) und bei dem zur Bildung einer Stellgröße das Produkt aus dem Eingangswert und dem Minimalwert der Schnittwertmenge gebildet wird.

9. Anordnung zur Fuzzy-Regelung,

   a) bei der mindestens ein Klassifikator (KL) und eine Inferenz-Einheit (R, Rekon) vorgesehen sind,
   b) bei der dem Klassifikator (KL) ein sich zeitlich änderndes Regeldifferenzsignal (e) zugeführt wird, welcher daraus ein Wahrscheilichkeitsverteilungsdichtesignal eines Regeldifferenzsignalwertes erzeugt,
   c) und bei dem der Inferenz-Einheit eine unscharfe Größe (e) in Form des Wahrscheilichkeitsverteilungsdichtesignals zugeführt wird, wobei es von der Inferenz-Einheit als Regeldifferenzzugehörigkeitsfunktion interpretiert und mit mindestens einer weiteren Zugehörigkeitsfunktion logisch verknüpft wird, um daraus eine Stellgröße zu bilden.

10. Anordnung zur Fuzzy-Regelung nach Anspruch 9, bei dem eine Mamdani-Inferenz-Einheit (R) vorgesehen ist.

11. Anordnung zur Fuzzy-Regelung nach Anspruch 9, bei dem eine Takagi-Sugeno-Inferenz-Einheit (Rekon) vorgesehen ist.

12. Anordnung zur Fuzzy-Regelung nach Anspruch 9, bei der ein Sliding Mode Fuzzy Controller mit Boundary-Layer (BL) vorgesehen ist.

## Claims

1. Process for fuzzy control,

   a) in which a fuzzy controller (FR) is fed, as control difference (e), at least one unsharp variable (e) in the form of a probability distribution density of its values,
   b) in which the probability distribution density is normalized to a predefined value (Sc),
   c) and which, in an inference procedure (R, Rekon) of the fuzzy controller (FR), the normalized probability distribution density (WD) is processed as the control difference membership function (RZ), instead of a sharp value, in order to form a manipulated variable (u).

2. Process according to Claim 1, in which at least the probability distribution density (WD) of a value of a variable of the control loop which alters over time is determined over a fixed time interval and is used in order to form the control difference (e).

3. Process according to Claim 2, in which, as control difference (e), a difference between the control error and the time derivative of the control error is fed.

4. Process according to Claim 1, in which at least one spatial distribution of values within a defined spatial area of a spatially occurring variable of the control loop is determined and is used as the probability distribution density (WD) of only one value in order to form the control difference (e).

5. Process according to Claim 2, in which the probability distribution density (p) is determined during one control process.

6. Process according to Claim 5, in which the probability distribution density (p) during one control process is determined by means of a multiple analysis of the control difference and counting the analyzed values.

7. Process according to one of Claims 1 to 6,

   a) in which, in a condition part of the inference procedure according to the Mamdani process, the average of the control difference membership function is formed using at least one input reference fuzzy set, and the membership value of the crosspoint is determined as the crosspoint value,
   b) in which the crosspoint value is used in a conclusion part of the inference procedure in order to form a manipulated variable.

8. Process according to one of Claims 1 to 6,

   a) in which, in a condition part of the inference procedure according to the Takagi-Sugeno process, the average of the control difference membership function is formed using at least two input reference fuzzy sets of a rule, and the membership values of the respective crosspoints are determined as a crosspoint set,
   b) in which, as a sharp input value for a conclusion part of the inference procedure according to the Takagi-Sugeno process, the value of the centre of gravity of the control difference membership function is determined,
   c) and in which, in order to form a manipulated variable, the product of the input value and the minimum value of the crosspoint set is formed.

9. Arrangement for fuzzy control,

   a) in which at least one classifier (KL) and one inference unit (R, Rekon) are provided,
   b) in which the classifier (KL) is fed a control difference signal (e) which varies with time, the said classifier forming therefrom a probability distribution density signal of a control difference signal value,
   c) and in which the inference unit is fed an unsharp variable (e) in the form of the probability distribution density signal, the latter being interpreted by the inference unit as a control difference membership function and being logically linked with at least one further membership function in order to form a manipulated variable therefrom.

10. Arrangement for fuzzy control according to Claim 9, in which a Mamdani inference unit (R) is provided.

11. Arrangement for fuzzy control according to Claim 9, in which a Takagi-Sugeno inference unit (Rekon) is provided.

**12.** Arrangement for fuzzy control according to Claim 9, in which a sliding mode fuzzy controller with boundary layer (BL) is provided.

**Revendications**

1. Procédé de régulation à logique floue,

   a) dans lequel au moins une grandeur floue (e) sous la forme d'une densité de distribution de probabilité de ses valeurs est amenée comme différence de réglage (e) à un régulateur à logique floue (FR),
   b) dans lequel la densité de distribution de probabilité est normalisée sur une valeur prédéfinie (Sc),
   c) et dans lequel, dans une procédure d'inférence (R, Rekon) du régulateur à logique floue (FR), la densité de distribution de probabilité (WD) normalisée est traitée comme fonction d'appartenance de différence de réglage (RZ) à la place d'une valeur précise pour former une grandeur réglante (u).

2. Procédé selon la revendication 1, dans lequel au moins la densité de distribution de probabilité (WD) d'une valeur d'une grandeur variable dans le temps d'un circuit de réglage est déterminée sur un intervalle de temps défini et est utilisée pour former la différence de réglage (e).

3. Procédé selon la revendication 2, dans lequel est amenée comme différence de réglage (e) une différence entre l'erreur de réglage et la dérivée temporelle de l'erreur de réglage.

4. Procédé selon la revendication 1, dans lequel au moins une distribution dans l'espace de valeurs situées à l'intérieur d'une zone d'espace définie est déterminée par une grandeur existant dans l'espace du circuit de réglage et est utilisée comme densité de distribution de probabilité (WD) de seulement une valeur pour former la différence de réglage (e).

5. Procédé selon la revendication 2, dans lequel la densité de distribution de probabilité (p) est déterminée pendant un processus de régulation.

6. Procédé selon la revendication 5, dans lequel la densité de distribution de probabilité (p) pendant un processus de régulation est déterminée par analyse multiple de la différence de réglage et par comptage des valeurs analysées.

7. Procédé selon l'une des revendications 1 à 6,

   a) dans lequel, dans une partie des prémisses de la procédure d'inférence selon le procédé de Mamdani, la moyenne de la fonction d'appartenance de la différence de réglage est calculée à l'aide d'au moins un ensemble flou de valeurs d'entrée de référence et la valeur d'appartenance de l'intersection est déterminée comme valeur d'intersection,
   b) dans lequel la valeur d'intersection est utilisée dans une partie des conclusions de la procédure d'inférence pour former une grandeur réglante.

8. Procédé selon l'une des revendications 1 à 6,

   a) dans lequel, dans une partie des prémisses de la procédure d'inférence selon le procédé de Takagi-Sugeno, la moyenne de la fonction d'appartenance de la différence de réglage est calculée à l'aide d'au moins deux ensembles flous de valeurs d'entrée de référence d'une règle et les valeurs d'appartenance des intersections respectives sont déterminées comme ensemble des valeurs d'intersection,
   b) dans lequel la valeur du centre de gravité de la fonction d'appartenance de la différence de réglage est calculée comme valeur d'entrée précise pour une partie des conclusions de la procédure d'inférence selon le procédé de Takagi-Sugeno,
   c) et dans lequel le produit de la valeur d'entrée et de la valeur minimale de l'ensemble des valeurs d'intersection est calculé pour former une grandeur réglante.

9. Dispositif de régulation à logique floue,

   a) dans lequel au moins un classificateur (KL) et une unité d'inférence (R, Rekon) sont prévus,

b) dans lequel un signal de différence de réglage (e) variable dans le temps est amené au classificateur (KL), lequel génère à partir de celui-ci un signal de densité de distribution de probabilité d'une valeur de signal de la différence de réglage,

c) et dans lequel une grandeur floue (e) sous la forme du signal de densité de distribution de probabilité est amenée à l'unité d'inférence, lequel signal est interprété par l'unité d'inférence comme fonction d'appartenance de la différence de réglage et est combiné par une opération logique avec au moins une autre fonction d'appartenance pour en former une grandeur réglante.

10. Dispositif de régulation à logique floue selon la revendication 9, dans lequel une unité d'inférence de Mamdani (R) est prévue.

11. Dispositif de régulation à logique floue selon la revendication 9, dans lequel une unité d'inférence de Takagi-Sugeno (Rekon) est prévue.

12. Dispositif de régulation à logique floue selon la revendication 9, dans lequel un sliding-mode-fuzzy-controller à boundary-layer (BL) est prévu.

# Figur 1

# Figur 2

a)

b)

# Figur 3

a)

| R1: | IF | $e_N =$ | NB | THEN | $u_N =$ | PB |
|-----|-----|---------|-----|------|---------|-----|
| R2: | IF | $e_N =$ | NS | THEN | $u_N =$ | PS |
| R3: | IF | $e_N =$ | Z | THEN | $u_N =$ | Z |
| R4: | IF | $e_N =$ | PS | THEN | $u_N =$ | NS |
| R5: | IF | $e_N =$ | PB | THEN | $u_N =$ | NB |

b)

c)

# Figur 4

a)

b)

Figur 5

Figur 6

Figur 7

$\dot{\bar{e}}$

BL

$\dot{\bar{e}} + \lambda \cdot \bar{e} = 0$

$\bar{e}$

$\dot{\bar{s}} + \dfrac{K}{\Phi} \cdot \bar{s} = \bar{G}(t)$

$\Phi$